# EUROPÄISCHE PATENTSCHRIFT

(11) **EP 2 502 714 B1**
(45) Veröffentlichungstag und Bekanntmachung des Hinweises auf die Patenterteilung: **01.05.2013**
(21) Anmeldenummer: 11002396.7
(22) Anmeldetag: 23.03.2011
(51) Int. Cl.: B25J 15/12

(54) **Haltevorrichtung zum Festhalten von Gegenständen**
Holding device for fixing objects
Dispositif de retenue pour la retenue d'objets

(43) Veröffentlichungstag der Anmeldung: 26.09.2012
(73) Patentinhaber: Festo AG & Co. KG, 73734 Esslingen (DE)
(72) Erfinder: Giousouf, Metin, Dr., 73732 Esslingen (DE); Kaminski, Ruwen, 70190 Stuttgart (DE); Saller, Stefan, 73733 Esslingen (DE)
(74) Vertreter: Abel, Martin

(56) Entgegenhaltungen:
- EP-A1- 2 241 403
- EP-A2- 1 203 640
- DE-A1-102005 010 380
- DE-A1-102007 026 721
- DE-U1- 20 318 845
- DE-U1-202006 006 115

## Beschreibung

Die Erfindung betrifft eine Haltevorrichtung zum Festhalten von Gegenständen, insbesondere eine Greifvorrichtung, mit mindestens einer Halteeinheit, die eine Basis und eine sich in einer Hauptrichtung von der Basis weg erstreckende Haltestruktur aufweist, wobei die Haltestruktur zwei sich ausgehend von der Basis in der Hauptrichtung unter gegenseitiger Annäherung zu einem Kopfbereich hin erstreckende biegeelastische Seitenwangen und mehrere, jeweils an beiden Seitenwangen angelenkte und in der Hauptrichtung zueinander beabstandete starre Koppelstreben enthält, wobei wenigstens eine Seitenwange eine zum Angreifen am jeweils festzuhaltenden Gegenstand dienende Haltewange bildet, wobei die Haltevorrichtung mit Erfassungsmitteln ausgestattet ist, durch die die aufgrund der beim Halten eines Gegenstands auf die Haltewange einwirkenden Gegenkraft auftretende kraftabhängige Verformung der Haltewange erfassbar ist.

In der WO 2007/118571 A1 ist ein Gerät zur Kraftabgabe beschrieben, das als Haltevorrichtung zum aktiven Festhalten von Gegenständen nutzbar ist. Eine Halteeinheit dieser Haltevorrichtung verfügt über eine einerseits an einer Basis fixierte und sich andererseits in Richtung zu einem Kopfbereich hin verjüngende Haltestruktur, die zwei längsseits nebeneinander angeordnete, federelastisch biegbare Seitenwangen enthält, die mittels in der Hauptrichtung der Haltestruktur mit Abstand zueinander angeordneten, quer verlaufenden Koppelstreben miteinander verbunden sind. Die Verbindungsstellen zwischen den Koppelstreben und den Seitenwangen sind als Gelenke ausgebildet. Auf diese Weise besitzt die Haltestruktur eine besondere Flexibilität, die es einer Seitenwange ermöglicht, sich unter individueller Verformung an einen festzuhaltenden Gegenstand anzuschmiegen, wenn sie zur Ausübung einer Funktion als Haltewange an diesen Gegenstand angedrückt wird. Die Haltevorrichtung kann insbesondere Bestandteil einer zum Ergreifen und anschließenden Verlagern von Gegenständen geeigneten Greifvorrichtung sein.

Die Anwendung der bekannten Haltevorrichtung unterliegt der Problematik, dass die Haltestruktur aufgrund einer beim Einwirken auf einen Gegenstand auftretenden Überbeanspruchung eventuell beschädigt wird. Andererseits kann es bei empfindlichen Gegenständen trotz des guten Verformungsvermögens der Haltewange zu Beeinträchtigungen eines festzuhaltenden Gegenstandes aufgrund einer zu intensiven Beaufschlagung durch die Haltewange kommen.

Die DE 10 2005 010 380 A1 beschreibt ein ähnlich konzipiertes Greifwerkzeug, bei dem eine selbstadaptive Kinematik unter anderem dadurch verwirklicht ist, dass die zu einem Kopfbereich hin konvergierenden Seitenwangen in einzelne, gelenkig miteinander verbundene Längenabschnitte unterteilt sind. Dadurch soll ein adaptiver Greifvorgang ohne aufwendige Steuerung realisierbar sein.

Die DE 10 2007 026721 A1 offenbart ein im eingangs genannten Sinne ausgebildetes Werkzeug, das mit Sensoren ausgestattet ist.

Eine Aufgabe der Erfindung besteht darin, bei einer Haltevorrichtung der eingangs genannten Art Maßnahmen vorzusehen, die die Verwirklichung eines kontrollierten Haltevorganges begünstigt.

Zur Lösung dieser Aufgabe ist vorgesehen, dass die Erfassungsmittel ausgebildet sind, um mindestens eine sich bei einer Verformung der Haltewange verändernde Relativposition zwischen zwei relativ zueinander bewegbaren Komponenten der Halteeinheit erfassen.

Auf diese Weise verfügt die Haltevorrichtung über der verformbaren Haltewange zugeordnete Erfassungsmittel, die in der Lage sind, durch direktes oder indirektes Zusammenwirken mit der Haltewange deren in Abhängigkeit von der durch einen festzuhaltenden Gegenstand ausgeübten Gegenkraft auftretende Verformung zu erfassen. Auf Basis der so ermittelten Werte können Gegenstände unterschiedlicher Art und unterschiedlicher Empfindlichkeit kontrolliert festgehalten werden, ohne Schäden an der Haltestruktur oder am jeweils festzuhaltenden Gegenstand zu riskieren. Mittels einer zugeordneten elektronischen Regeleinrichtung lässt sich die zum Festhalten eines Gegenstandes hervorgerufene Bewegung einer Halteeinheit beispielsweise so kontrollieren, dass die vermittelte Verformung stets unterhalb eines kritischen Grenzwertes bleibt.

Die kraftabhängige Verformung der Haltewange kann prinzipiell direkt an der Haltewange selbst ermittelt werden, beispielsweise durch Ausstattung mit Dehnmessstreifen oder mit anderen auf eine Verformung der Haltewange unmittelbar ansprechenden Einrichtungen. Als vorteilhafter wird es jedoch angesehen, den Verformungsgrad der Haltewange indirekt zu bestimmen, nämlich beispielsweise durch Erfassung der Verformung mindestens einer anderen Komponente der Halteeinheit und/oder durch Erfassung der beim Verformen der Haltewange zwischen wenigstens zwei anderen Komponenten der Halteeinheit auftretenden relativen Auslenkung.

Unter Einbeziehung einer geeigneten Auswerteelektronik besteht auch die Möglichkeit, durch Vergleich der momentan erfassten Verformungswerte mit zuvor aufgenommenen Vergleichsbeziehungsweise Kenndaten auf die bei einem Haltevorgang tatsächlich auf die Haltewange einwirkende Gegenkraft zu schließen. Dies ist besonders vorteilhaft, wenn die Haltevorrichtung für Greifaufgaben eingesetzt werden soll, bei denen es um das Greifen von empfindlichen Gegenständen geht und bei denen beispielsweise biologische Objekte wie Äpfel oder Eier schonend ergriffen und transportiert werden sollen.

Die Haltevorrichtung kann je nach Ausführungsform mit nur einer oder mit gleichzeitig mehreren Halteeinheiten ausgestattet sein. Auch besteht die Möglichkeit, mindestens eine Halteeinheit mit einer Widerlagereinheit zu kombinieren, wobei Letztere beispielsweise eine nicht nachgiebige Anlagefläche sein kann, so dass ein Gegenstand zwischen dieser Anlagefläche und mindestens einer Halteeinheit lösbar festgespannt werden kann.

Ein Haltevorgang der Haltevorrichtung wird insbesondere dadurch realisiert, dass die Halteeinheit an ihrer Basis mittels eines geeigneten Aktuators so bewegt wird, dass die Haltewange am festzuhaltenden Gegenstand zur Anlage gelangt. An den Komponenten der Haltestruktur müssen in diesem Fall keine Aktuatoren angreifen.

Die Erfassungsmittel sind so ausgebildet, dass mit ihnen mindestens eine sich bei einer Verformung der Haltewange verändernde Relativposition zwischen zwei relativ zueinander bewegbaren Komponenten der Halteeinheit erfassbar ist. Die Haltewange selbst gehört zweckmäßigerweise nicht zu den beiden hinsichtlich ihrer veränderbaren Relativposition zu erfassenden Komponenten. Als Komponentenpaar, dessen sich verändernde Relativposition durch die Erfassungsmittel erfassbar ist, kommen insbesondere zwei in der Hauptrichtung zueinander beabstandete Koppelstreben in Frage oder die die Haltestruktur tragende Basis und eine der die Seitenwangen miteinander verbindenden Koppelstreben.

Vorteilhafte Weiterbildungen der Erfindung gehen aus den Unteransprüchen hervor.

Um die Erfassungsgenauigkeit zu erhöhen, sind die Erfassungsmittel zweckmäßigerweise derart ausgebildet, dass durch sie jeweils mindestens eine sich zwischen unterschiedlichen Paaren von relativ zueinander bewegbaren Komponenten der Halteeinheit verändernde Relativposition erfassbar ist. Indem die derart jeweils gleichzeitig erfassten Relativpositionen in eine Beziehung zueinander gesetzt werden, ist eine optimale Auswertung in Bezug auf die Ermittlung der kraftproportionalen Verformung der Haltewange möglich. Insbesondere besteht durch die Erfassung unterschiedlicher sich verändernder Relativpositionen die Möglichkeit, nicht nur die Kraftwirkung beziehungsweise Verformung der Haltewange zu messen, sondern auch den Ort der Krafteinleitung entlang der Längserstreckung der Haltewange.

Wenigstens zwei in Bezug auf ihre Relativposition überwachte Komponenten sind zweckmäßigerweise zum einen von der Basis und zum anderen von einer der Koppelstreben gebildet. Hier wird also die Relativposition zwischen zwei Komponenten erfasst, von denen eine - nämlich die Basis - bei der Erfassung der Relativposition ortsfest verbleibt und nur die andere Komponente - nämlich die Koppelstrebe - eine diesbezügliche Relativbewegung ausführt.

Möglich wäre es auch, mindestens eine Relativposition zwischen zwei Komponenten der Halteeinheit zu erfassen, die beide im Zusammenhang mit einem Haltevorgang eine Bewegung ausführen. Insbesondere kann hierzu die Relativposition zwischen zwei Koppelstreben erfasst und ausgewertet werden.

Wenn zur Ermittlung der Verformung der Haltewange die sich verändernde Relativposition zwischen den Komponenten mehrerer Paare von Komponenten der Halteeinheit zugrundegelegt wird, ist eine der Komponenten dieser mehreren Komponentenpaare zweckmäßigerweise identisch. Beispielsweise kann eine Komponente jedes überwachten Komponentenpaares von der die Haltestruktur tragenden Basis der Halteeinheit gebildet sein.

Bei mindestens einer von den Erfassungsmitteln erfassbaren Relativposition zwischen zwei Komponenten der Halteeinheit handelt es sich vorzugsweise um einen sich bei Auslenkung beziehungsweise Verformung der Haltewange verändernden Abstand. Insbesondere kann ein sich in der Hauptrichtung verändernder Abstand zwischen zwei Komponenten der Halteeinheit erfasst werden.

Da insbesondere die Koppelstreben bei einer Verformung der Haltewange äußerst unlineare Bewegungen ausführen, wird es als zweckmäßig erachtet, die Bewegung mindestens einer Komponente der Haltestruktur durch Zuordnung einer geeigneten Bewegungsumsetzungsmechanik in eine leichter erfassbare Bewegung umzusetzen. Dies geschieht zweckmäßigerweise mittels einer Hebelmechanik.

Zur einfachen und präzisen Erfassung der sich verändernden Relativposition zweier Komponenten der Halteeinheit ist es vorteilhaft, wenn die Erfassungsmittel ein zwischen die hinsichtlich ihrer Relativposition zu erfassenden Komponenten zwischengeschaltetes Indikatorglied enthalten, das bei der Relativbewegung der genannten Komponenten relativ zu beiden Komponenten unter Ausführung einer Indikatorbewegung bewegt wird. Eine zusätzlich vorhandene Sensoreinrichtung der Haltevorrichtung spricht auf die Indikatorbewegung des Indikatorgliedes an und ruft ein vom Grad der Verformung der Haltewange abhängiges Signal hervor, das von einer elektronischen Auswerteeinrichtung verarbeitet werden kann. Bei dem durch die Bewegung des Indikatorgliedes hervorgerufenen Signal handelt es sich insbesondere um ein elektrisches Spannungssignal.

Das Indikatorglied kann Bestandteil einer Bewegungsumsetzungsmechanik der weiter oben beschriebenen Art sein. Zweckmäßigerweise ist das Indikatorglied an einem Schwenkarm angeordnet, der an der einen der hinsichtlich ihrer Relativposition überwachten Komponenten schwenkbar gelagert ist und der an einer mit Abstand zum zugeordneten Schwenklagerbereich angeordneten Stelle mit der jeweils anderen Komponente bewegungsgekoppelt ist. Diese Bewegungskopplung erfolgt zweckmäßigerweise unter Zwischenschaltung einer sowohl an dem Schwenkarm als auch an der mit dem Schwenkarm gekoppelten Komponente gelenkig gelagerten Mitnehmerstrebe.

Damit das Indikatorglied während seiner Indikatorbewegung möglichst nicht verkippt, kann unter Vermittlung mehrerer zueinander paralleler Schwenkarme eine Parallelführung realisiert werden. In diesem Fall ist das Indikatorglied zweckmäßigerweise an beiden Schwenkarmen gelenkig gelagert, wobei die Gelenkachsen zusammen mit den Schwenkachsen der Schwenkarme in den Ecken eines Parallelogramms liegen. Wenn im Betrieb der Haltevorrichtung die Auslenkung des Schwenkarmes relativ gering ist, kann auf die Parallelkinematik ohne weiteres auch verzichtet werden, wobei die Möglichkeit besteht, das Indikatorglied und den Schwenkarm aus einem einzigen Stück herzustellen.

Die Erfassungsmittel sind zur Erfassung der kraftabhängigen Verformung der Haltewange zweckmäßigerweise mit mindestens einer Sensoreinrichtung ausgestattet. Mindestens eine Sensoreinrichtung kann beispielsweise auf der Basis von Dehnmessstreifenstrukturen konzipiert sein. Solche Strukturen können insbesondere direkt auf die glatte Oberfläche eines Biegebalkens aufgedruckt oder als körperliche Dehnmessstreifen aufgeklebt sein. Abgesehen von der Messung der Deformation von beim Verformen der Haltewange ihrerseits mechanisch verformten Komponenten kann mindestens eine Sensoreinrichtung auch auf optischer, magnetischer oder elektrostatischer Basis arbeiten.

Ein optisches Sensorprinzip kann darauf gestützt sein, dass an einer der relativ zueinander bewegten Komponenten der Halteeinheit ein Reflexlichtsensor angeordnet ist, der den Reflexionsgrad einer dem Sensor gegenüberliegenden Fläche abstandsabhängig misst. Die Reflexionsfläche kann in der Halteeinheit selbst ausgebildet sein.

Die Erfassungsmittel sind vorzugsweise mit einer elektronischen Auswerteeinrichtung ausgestattet, die auf der Basis von in Speichermitteln hinterlegten verformungsabhängigen Vergleichsdaten in der Lage sind, die Gegenkraft zu ermitteln, welche für die erfasste Verformung ursächlich ist. Eine solche elektronische Auswerteeinrichtung kann, wie zweckmäßigerweise auch eine unter Umständen vorhandene Sensoreinrichtung, in vorteilhafter Weise an oder in der Basis der Halteeinheit angeordnet sein.

Bei einer zweckmäßigen Ausgestaltung der Haltevorrichtung sind die Erfassungsmittel derart ausgebildet, dass sie für mehrere Verformungszustände und insbesondere für jeden Verformungszustand der Haltewange Verformungswerte erfassen können, die an mehreren unterschiedlichen Stellen der Haltestruktur ermittelt werden. Auf diese Weise lässt sich jedem Verformungszustand eine durch die Erfassungsmittel erfasste Verformungswertegruppe zuordnen, bei der es sich um ein Verformungswertepaar handelt, wenn jedem Verformungszustand der Haltewange zwei an unterschiedlichen Stellen der Haltestruktur abgeleitete Verformungswerte zugrundegelegt werden. Eine elektronische Auswerteeinrichtung der Erfassungsmittel ist derart konzipiert, dass sie auf der Basis der für jeden Verformungszustand ermittelten Verformungswertegruppe eine Krafteinleitungszone der Haltewange identifizieren kann, an der die für den aktuellen Verformungszustand verantwortliche Gegenkraft eingeleitet wird.

Zweckmäßigerweise ist die Haltewange auswertungsmäßig in mehrere in der Hauptrichtung aufeinanderfolgende Krafteinleitungszonen eingeteilt, wobei die elektronische Auswerteeinrichtung über Speichermittel verfügt, in denen für unterschiedliche Gegenkräfte Vergleichskurven von zonenabhängig auftretenden Verformungswertegruppen hinterlegt sind. Unter Mitwirkung von Vergleichermitteln der elektronischen Auswerteeinrichtung besteht die Möglichkeit, die im Betrieb der Haltevorrichtung aktuell ermittelten Verformungswertegruppen mit den Verformungswertegruppen der als Referenz abgespeicherten Vergleichskurven zu vergleichen, um in Abhängigkeit von ermittelten Übereinstimmungen die jeweils zugehörige Krafteinleitungszone und zweckmäßigerweise auch die in dieser Krafteinleitungszone eingeleitete Gegenkraft zu bestimmen.

Wird durch die Erfassungsmittel nur eine sich verändernde Relativposition erfasst, kann zwar grundsätzlich die Kraftwirkung beziehungsweise Verformung der Haltewange gemessen werden, solange eine Gegenkraft auf die Haltewange einwirkt. Wenn gewährleistet ist, dass die Gegenkraft stets an der gleichen Stelle auf die Haltewange einwirkt, lässt sich unter Berücksichtigung des ermittelten Verformungsgrades auch die momentan vorherrschende Gegenkraft ermitteln. Dies ist nicht mehr ohne weiteres möglich, wenn sich der Krafteinleitungsort für die Gegenkraft bei aufeinanderfolgenden Halte- beziehungsweise Greifvorgängen ändert, weil beispielsweise die Geometrien der zu haltenden Gegenstände voneinander abweichen. Aufgrund der komplexen Struktur der Haltevorrichtung hängt die Verformung der Haltewange nicht nur von der Höhe der Gegenkraft ab, sondern auch vom zugehörigen Krafteinleitungsort, das heißt insbesondere vom Abstand der Krafteinleitungsstelle zu der die Haltestruktur tragenden Basis. Um daher auch bei sich örtlich verändernden Krafteinleitungsstellen eine zuverlässige Bestimmung beziehungsweise Überwachung der Gegenkraft vornehmen zu können, ist es zweckmäßig, den Ort der Krafteinleitung zusätzlich zu berücksichtigen. Der Krafteinleitungsort kann insbesondere durch die vorstehend geschilderten Maßnahmen zuverlässig bestimmt werden, bei denen unterschiedliche, sich beim Verformen der Haltewange verändernde Relativpositionen in die Berechnung eingehen.

Bei einer zweckmäßigen Ausgestaltung der Haltevorrichtung verfügen die Erfassungsmittel über eine Leuchtanzeigeeinrichtung, die eine Visualisierung des Verformungsgrades der Haltewange ermöglicht. Die Visualisierung erfolgt insbesondere verformungsabhängig variabel. Beispielsweise kann das Ausgangssignal einer bei der Ermittlung der Verformung der Haltewange mitwirkenden Sensoreinrichtung mittels eines LED-Leuchtbandes wiedergegeben werden, bei dem bei unterschiedlichen Verformungsgraden eine entsprechend unterschiedliche Anzahl von LEDs aufleuchtet. Zusätzlich oder alternativ kann auch durch sich verformungsabhängig verändernde Strahlungsenergie auf unterschiedliche Verformungsgrade hingewiesen werden.

Durch die Erfassungsmittel generierte Signale können sowohl kabelgebunden als auch drahtlos zur Verarbeitung in einer externen elektronischen Steuereinrichtung ausgegeben werden. Die Haltevorrichtung ist dann mit entsprechenden Signalkommunikationsmitteln ausgestattet.

Soll die Haltevorrichtung insgesamt für drahtlosen Betrieb nutzbar sein, empfiehlt sich die Ausstattung mit einem die notwendige Energieversorgung gewährleistenden wiederaufladbaren Akkumulator. Die Aufladung dieses Akkumulators kann beispielsweise über einen entsprechenden Wandler mit Hilfe der im Rahmen der Haltevorgänge stattfindenden Bewegungen der Haltestruktur beziehungsweise deren Komponenten erfolgen.

Nachfolgend wird die Erfindung anhand der beiliegenden Zeichnung näher erläutert. In dieser zeigen:
- Figur 1: einen Längsschnitt durch eine erfindungsgemäße Haltevorrichtung bevorzugten Aufbaus, die mit zwei nebeneinander angeordneten Halteeinheiten ausgestattet ist, von denen die eine nur strichpunktiert schematisch angedeutet ist, wobei ein Zustand bei unbelasteter Haltewange gezeigt ist,
- Figur 2: eine Halteeinheit der in Figur 1 gezeigten Haltevorrichtung im aufgrund des Einwirkens einer Gegenkraft F verformten Zustand der Haltewange,
- Figur 3: eine alternative Ausführungsform einer Halteeinheit im Längsschnitt, ohne Abbildung einer insbesondere im Basisbereich angeordneten elektronischen Auswerteeinrichtung und im nicht durch eine Gegenkraft beaufschlagten Zustand der Haltewange,
- Figur 4: die Halteeinheit aus Figur 3 im aufgrund des Einwirkens einer Gegenkraft verformten Zustand der Haltestruktur beziehungsweise deren Haltewange, und
- Figur 5: ein für eine bestimmte Gegenkraft F erstelltes Vergleichsdiagramm, in dem die Werte der verformungsabhängig auftretenden relativen Auslenkung "w" zwischen jeweils zwei Komponenten der Halteeinheit als Funktion des Krafteinleitungsortes beziehungsweise der Krafteinleitungszone "z" aufgetragen sind und das außerdem eine zugehörige Differenzkurve enthält.

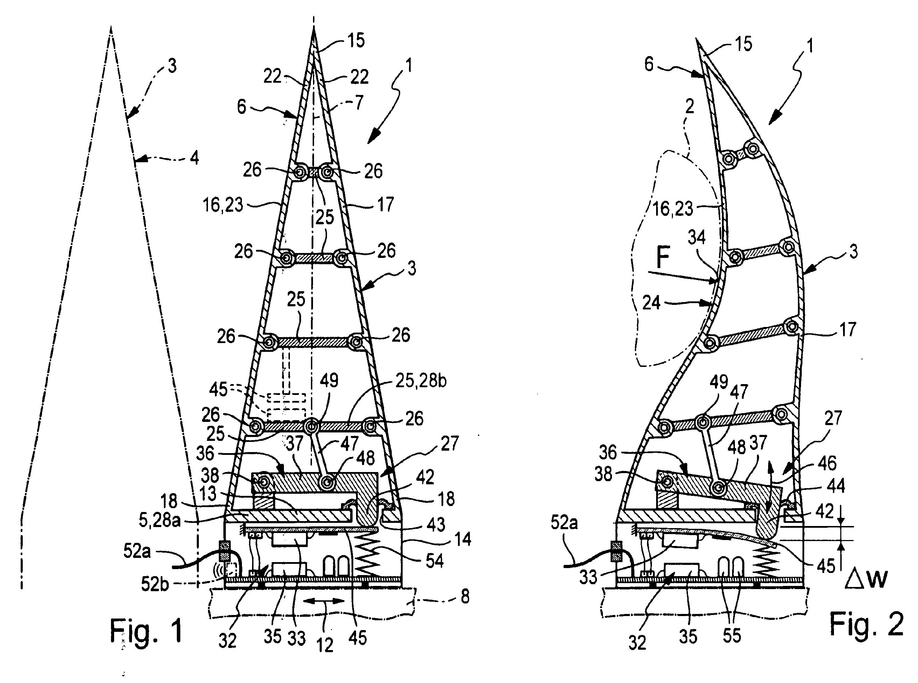

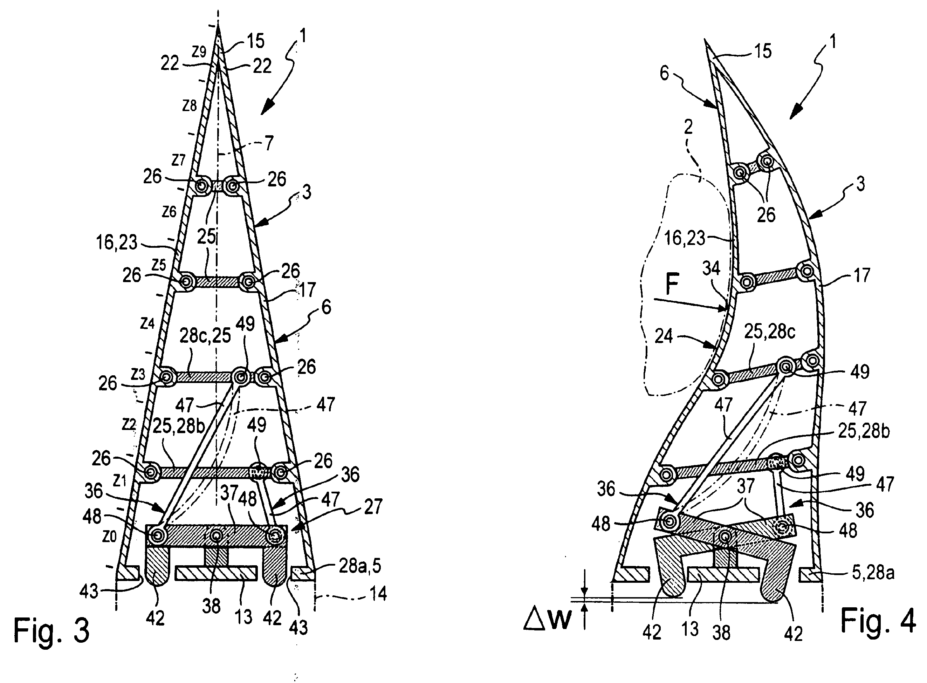

Die in ihrer Gesamtheit mit Bezugsziffer 1 bezeichnete und in Figuren 1 bis 4 jeweils nur teilweise abgebildete Haltevorrichtung ist verwendbar, um beliebige Gegenstände 2, von denen in den Figuren 2 und 4 jeweils einer partiell strichpunktiert angedeutet ist, zeitweilig festzuhalten. In diesem Zusammenhang kann die Haltevorrichtung 1 beispielsweise eine Spannvorrichtung sein, mit der sich ein zu bearbeitender Gegenstand zeitweilig ortsfest fixieren lässt. Eine besonders vorteilhafte Ausgestaltung, die auch den Ausführungsbeispielen zugrunde liegt, ist jedoch diejenige einer Greifvorrichtung, mit der sich Gegenstände 2 zu Zwecken eines Verlagerns ergreifen lassen. Mit einer solchen Greifvorrichtung kann beispielsweise Obst oder sonstiges empfindliches biologisches Material zwischen verschiedenen Behältnissen umgesetzt werden.

Die Haltevorrichtung 1 enthält mindestens eine Halteeinheit 3 erfindungsgemäßen Aufbaus, der zweckmäßigerweise mindestens eine Gegenhaltefläche 4 benachbart ist, so dass ein Gegenstand 2 zwischen der Halteeinheit 3 und der Gegenhaltefläche 4 einspannbar ist.

Die Gegenhaltefläche 4 kann ein starres Gebilde sein. Es kann sich bei der Gegenhaltefläche 4 beispielsweise um eine Tischfläche handeln, auf der ein festzuspannender Gegenstand abgelegt werden kann. Ebenso ist es möglich, die Gegenhaltefläche 4 als forminvarianten Bestandteil eines benachbart zu der Halteeinheit 3 angeordneten Gegenhaltefingers auszubilden.

Besonders vorteilhaft ist allerdings eine dahingehende Ausgestaltung der Haltevorrichtung 1, bei der auch die mindestens eine Gegenhaltefläche 4 Bestandteil einer erfindungsgemäßen Halteeinheit 3 ist. Eine Haltevorrichtung 1 kann also je nach Ausgestaltung über nur eine Halteeinheit 3 oder über mehrere funktionell miteinander kooperierende Halteeinheiten 3 verfügen.

Im weiteren Verlauf dieser Beschreibung wird die Haltevorrichtung 1 anhand jeweils nur einer Halteeinheit 3 erläutert, wobei mindestens eine weitere Halteeinheit 3 über einen ebenfalls erfindungsgemäßen Aufbau verfügen kann.

Die Halteeinheit 3 verfügt über eine Verbundstruktur bestehend aus einer dem Fußbereich der Halteeinheit 3 zugeordneten Basis 5 und einer sich ausgehend von der Basis 5 in einer durch eine strichpunktierte Linie verdeutlichten Hauptrichtung 7 von der Basis 5 weg erstreckenden Haltestruktur 6.

Unter Vermittlung der Basis 5 ist die Halteeinheit 3 an einer strichpunktiert angedeuteten Tragstruktur 8 der Haltevorrichtung 1 fixiert, insbesondere in lösbarer Weise. Die Tragstruktur 8 kann durch nicht weiter abgebildete Antriebsmittel der Haltevorrichtung 1 zu einer durch einen Doppelpfeil kenntlich gemachten Arbeitsbewegung 12 angetrieben werden, im Rahmen derer die Halteeinheit 3 an die Gegenhaltefläche annäherbar oder von dieser Gegenhaltefläche entfernbar ist. Die Basis 5 besteht beim Ausführungsbeispiel aus einer Basisplatte 13 und aus einem auf der der Haltestruktur 6 entgegengesetzten Seite unterhalb der Basisplatte 13 angeordneten Basisgehäuse 14.

Die Haltestruktur 6 verfügt über zwei sich ausgehend von der Basis 5 in der Hauptrichtung 7 zu einem Kopfbereich 15 hin erstreckende biegeelastische Seitenwangen 16, 17. Die Seitenwangen 16, 17 sind insbesondere plattenförmig mit rechteckigem länglichem Umriss ausgebildet, wobei die Plattenebene rechtwinkelig zur Zeichenebene verläuft.

Jede Seitenwange 16, 17 hat mithin eine Längserstreckung und weist bevorzugt über die gesamte Länge hinweg die gleiche Dicke auf.

Beide Seitenwangen 16, 17 erstrecken sich in einer gemeinsamen Erstreckungsebene, die exemplarisch mit der Zeichenebene zusammenfällt.

Jede Seitenwange 16, 17 hat einen Fußabschnitt 18, mit dem sie, insbesondere einstückig, an der Basis 5 und insbesondere an der Basisplatte 13 befestigt ist. Die Basis 5 ist eine in sich starre Struktur. Die Verbindung zwischen Fußabschnitt 18 und Basis 5 kann starr oder gelenkig sein.

In Richtung zu dem Kopfbereich 15 nähern sich die Seitenwangen 16, 17 einander an. Sie sind an ihren dem Fußabschnitt 18 entgegengesetzten Kopfabschnitten 22 insbesondere in dem Kopfbereich 15 zusammengeführt und aneinander fixiert. Zweckmäßigerweise liegt an dem Kopfbereich 15 eine starre Verbindung der beiden Kopfabschnitt 22 vor.

Beide Seitenwangen 16, 17 sind in der exemplarisch mit der Zeicheneben zusammenfallenden Erstreckungsebene federelastisch biegbar, vergleichbar einer Blattfeder. Die Figuren 2 und 4 vermitteln einen guten Eindruck über die Federelastizität der beiden Seitenwangen 16, 17.

Im beaufschlagungsneutralen Ausgangszustand, der in Figuren 1 und 3 illustriert ist, verfügen die Seitenwangen 16, 17 zweckmäßigerweise über eine lineare Längserstreckung. Dementsprechend kann die Haltestruktur 6 ausweislich der Figuren 1 und 3 einen dreiecksförmigen Umriss haben.

Wenn parallel zur Erstreckungsebene eine als Gegenkraft bezeichnete Kraft F auf eine Seitenwange 16 oder 17 einwirkt, kann sich selbige in der Kraftwirkungsrichtung verformen, so dass sich ein gekrümmter Längsverlauf einstellt. Dies ist in Figuren 2 und 4 illustriert. In diesen Figuren 2 und 4 ist eine Beaufschlagung mittels einer eine bestimmte Höhe aufweisenden Gegenkraft F dargestellt. Wird diese Gegenkraft F komplett weggenommen, kehrt die Haltestruktur 6 aufgrund der Federelastizität der Seitenwangen 16, 17 selbsttätig wieder in den aus Figuren 1 und 3 ersichtlichen Ausgangszustand zurück.

Eine der beiden Seitenwangen 16, 17, exemplarisch ist dies die in der Zeichnung links abgebildete Seitenwange 16, fungiert als Haltewange 23, die bei einem Haltevorgang von der Gegenkraft F beaufschlagt wird, bei der es sich um die Reaktionskraft des festzuhaltenden Gegenstandes 2 handelt. Durch entsprechende Verlagerung der Tragstruktur 8 kann die Haltestruktur 6 mit der von der zweiten Seitenwange 17 entgegengesetzten, als Haltefläche 24 bezeichneten Außenfläche voraus an den festzuhaltenden Gegenstand 2 angedrückt werden, woraus im Kontaktbereich mit dem Gegenstand 2 die auf die Haltefläche 24 und mithin auf die Haltewange 23 einwirkende Gegenkraft F resultiert.

Die beiden Seitenwangen 16, 17 sind über in der Hauptrichtung 7 mit Abstand zueinander angeordnete biegesteife Koppelstreben 25 miteinander verbunden. Die Verbindungsstellen sind als Gelenkstellen 26 ausgeführt, und zwar insbesondere mit zur Verformungsebene der Seitenwangen 16, 17 rechtwinkeligen Gelenkachsen. Diese Verformungsebene fällt mit der oben erläuterten Erstreckungsebene der Seitenwangen 16, 17 zusammen.

Die Koppelstreben 25 verlaufen quer zu der Hauptrichtung 7 und dabei, bezogen auf den belastungsneutralen Grundzustand der Figuren 1 und 3, rechtwinkelig zu der Hauptrichtung 7.

Die Seitenwangen 16, 17 können einstückig miteinander verbunden sein. Die Gelenkstellen 26 sind in diesem Fall als Festkörpergelenke oder sogenannte Filmscharniere ausgeführt. Es besteht jedoch auch die Möglichkeit, die Gelenkstellen 26 durch eigenständige Scharniermittel zu realisieren.

Im Grundzustand der Haltestruktur 6 bilden in der Hauptrichtung 7 benachbart zueinander angeordnete Koppelstreben 25 zusammen mit den sich zwischen jeweils benachbarten Gelenkstellen 26 erstreckenden Längenabschnitten der Seitenwangen 16, 17 zweckmäßigerweise jeweils eine trapezförmige Struktur.

Die Gestaltung der Seitenwangen 16, 17 ist nicht zwingend plattenförmig. Eine stabförmige Struktur wäre ebenfalls möglich.

Bei einem Haltevorgang beziehungsweise Greifvorgang wird die Haltewange 23 der Halteeinheit 3 durch die Gegenkraft F des festzuhaltenden Gegenstandes 2 verformt. Beispielsweise kann sich eine S-förmige Deformation der Haltewange 23 einstellen. Damit ein Gegenstand 2 kontrolliert festgehalten werden kann und eine Überbeanspruchung sowohl des Gegenstandes 2 als auch der Halteeinheit 3 ausgeschlossen werden kann, ist die Halteeinheit 3 mit Erfassungsmitteln 27 ausgestattet, durch die die in Abhängigkeit von der Höhe der Gegenkraft F in unterschiedlicher Intensität auftretende Verformung der Haltewange 23 erfassbar ist. Gemeint ist hierbei die Verformung in der weiter oben beschriebenen, beim Ausführungsbeispiel mit der Zeichenebene zusammenfallenden Verformungsebene.

Obgleich es möglich wäre, die Verformung der Haltewange 23 unmittelbar an der Haltewange 23 selbst zu ermitteln - beispielsweise durch aufgebrachte Dehnmessstreifenstrukturen -, wird es als vorteilhafter angesehen, den Grad der Verformung der Haltewange 23 indirekt zu erfassen, ohne dabei direkt die Verformung der Haltewange 23 zu berücksichtigen. Dieses Erfassungsprinzip kommt bei allen Ausführungsbeispielen zur Anwendung.

Die Erfassungsmittel 27 sind zweckmäßigerweise so ausgebildet, dass sich mit ihnen die bei einer Verformung der Haltewange verändernde Relativposition zwischen zwei relativ zueinander bewegbaren Komponenten der Halteeinheit 3 erfassen lässt. Die Halteeinheit 3 verfügt also über mindestens eine sich aus zwei beim Verformen der Haltewange 23 relativ zueinander bewegenden Komponenten 28a, 28b; 28a, 28c bestehendes Komponentenpaar, wobei durch die Erfassungsmittel 27 die Relativposition zwischen den zum gleichen Komponentenpaar gehörenden Komponenten 28a, 28b; 28a, 28c erfassbar ist.

Aus der sich verändernden Relativposition zwischen den zum gleichen Komponentenpaar gehörenden Komponenten 28a, b; 28a, c lässt sich der Verformungsgrad der Haltewange 23 indirekt bestimmen. Eine vorzugsweise in dem Basisgehäuse 14 untergebrachte elektronische Auswerteeinrichtung 32 ist in der Lage, in Abhängigkeit von der jeweils erfassten Relativposition ein insbesondere als elektrisches Spannungssignal vorliegendes elektrisches Ausgangssignal zu erzeugen, das der aktuellen Verformung der Haltewange 23 entspricht.

Die elektronische Auswerteeinrichtung 32 ist zweckmäßigerweise mit Speichermitteln 33 ausgestattet, in denen zuvor empirisch oder durch Berechnung ermittelte verformungsabhängige Vergleichsdaten abgelegt sind, die eine Zuordnung zwischen den aktuell ermittelten Relativpositionen und der jeweils zugeordneten Greifkraft ermöglichen, so dass anhand der erfassten Werte Rückschlüsse auf die auf die Haltewange 23 unmittelbar einwirkende Greifkraft möglich sind.

Als Komponenten 28a, b, c, deren Relativposition durch die Erfassungsmittel 27 bestimmbar ist, kommen prinzipiell alle sich bei einem Verformungsvorgang der Haltestruktur 6 relativ zueinander bewegenden Komponenten der Halteeinheit 3 in Frage. Es wäre beispielsweise denkbar, als hinsichtlich seiner Relativposition zu überwachendes Komponentenpaar zwei der in der Hauptrichtung 7 mit Abstand zueinander angeordnete Koppelstreben 25 heranzuziehen. Als besonders zweckmäßig wird es jedoch erachtet, dem zu überwachenden Komponentenpaar jeweils als erste Komponente 28a die Basis 5 und als zweite Komponente 28b, 28c eine Koppelstrebe 25 heranzuziehen.

Beim Ausführungsbeispiel der Figuren 1 und 2 sind die Erfassungsmittel 27 relativ einfach aufgebaut und enthalten nur ein überwachtes Komponentenpaar 28a, 28b, Letzteres bestehend zum einen aus der Basis 5 und zum anderen aus der sich in der Hauptrichtung 7 an die Basis 5 anschließenden Koppelstrebe 25.

Beim Ausführungsbeispiel der Figuren 3 und 4 berücksichtigen die Erfassungsmittel 27 die veränderbare Relativposition der Komponenten 28a, b; 28a, c zweier Komponentenpaare. Hierbei enthält des erste Komponentenpaar als erste Komponente 28a die Basis 5 und als zweite Komponente 28b die sich in der Hauptrichtung 7 an die Basis 5 anschließende Koppelstrebe 25. Das zweite Komponentenpaar enthält als erste Komponente 28a wiederum die Basis 5, als zweite Komponente 28c jedoch eine nicht mit der zweiten Komponente des ersten Komponentenpaars übereinstimmende Koppelstrebe 25, wobei es sich hier zweckmäßigerweise um diejenige Koppelstrebe 25 handelt, die sich in der Hauptrichtung 7 an die zum ersten Komponentenpaar 28a, 28b gehörende Koppelstrebe 25 anschließt.

Die Erfassungsmittel 27 sind mithin so ausgebildet, dass jeweils die sich zwischen unterschiedlichen Paaren relativ zueinander bewegbarer Komponenten 28a, b; 28a, c veränderbare Relativposition erfassbar ist. Hinzu kommt, dass diese mehreren, gleichzeitig überwachten Komponentenpaare eine Komponente 28a gemeinsam haben, nämlich zweckmäßigerweise die Basis 5. In allen Fällen des Ausführungsbeispiels sind die Erfassungsmittel 27 so ausgebildet, dass es sich bei der erfassbaren Relativposition der Komponenten eines jeweiligen Komponentenpaares 28a, b; 28a, c um einen sich verändernden Abstand handelt.

Das Ausführungsbeispiel der Figuren 1 und 2 eignet sich vor allem zur Überwachung von Haltevorgängen, bei denen die Gegenkraft F bei aufeinanderfolgenden Haltevorgängen stets im Wesentlichen am gleichen Krafteinleitungsort 34 in die Haltewange 23 eingeleitet wird. Dies wird immer dann der Fall sein, wenn wiederholt identische Gegenstände gehalten oder ergriffen werden. Hier kann dann auf der Basis von in den Speichermitteln 33 abgelegten Vergleichsdaten aus der jeweils ermittelten Relativposition zweier zum gleichen Komponentenpaar gehörender Komponenten 28a, 28b unmittelbar die Höhe der aktuell wirkenden Greifkraft F bestimmt werden. Ändert sich jedoch bei aufeinanderfolgenden Halte- beziehungsweise Greifvorgängen der Krafteinleitungsort 34 für die Gegenkraft F in der Hauptrichtung 7, ist mit der Berücksichtigung der Relativposition nur eines Komponentenpaars 28a, 28b keine reproduzierbare Aussage über die Höhe der momentan angreifenden Greifkraft möglich. In einem solchen Fall wird daher eine Bauform im Sinne der Figuren 3 und 4 vorgezogen.

Wie bereits geschildert, sind die Erfassungsmittel 27 beim Ausführungsbeispiel der Figuren 3 und 4 in der Lage, durch Berücksichtigung der Relativposition von zu zwei unterschiedlichen Komponentenpaaren gehörenden Komponenten 28a, b; 28a, c für mehrere Verformungszustände und insbesondere für jeden Verformungszustand der Haltewange 23 entsprechend zugeordnete Verformungswerte zu ermitteln. Wenn also eine gewisse Greifkraft F auf die Haltewange 23 einwirkt, kann unter Berücksichtigung des einen Komponentenpaars 28a, 28b ein erster Verformungswert und unter Berücksichtigung des zweiten Komponentenpaars 28a, 28c ein zweiter Verformungswert bestimmt werden. Dementsprechend korreliert jede Greifkraft F mit einem bestimmten Verformungswertepaar. Außerdem ergeben sich auch unterschiedliche Verformungswertepaare in Abhängigkeit davon, an welchem Krafteinleitungsort 34, also an welcher Stelle entlang der Hauptrichtung 7, die Greifkraft F in die Haltewange 23 eingeleitet wird.

Die elektronische Auswerteeinrichtung 32 ist so ausgebildet, dass sie auf der Basis des für den momentanen Verformungszustand ermittelten Verformungswertepaares eine Identifikation des Krafteinleitungsortes 34 an der Haltewange 23 vornehmen kann, wobei unter Berücksichtigung von in den Speichermitteln 33 abgelegten Referenz- beziehungsweise Vergleichsdaten sogar eine Bestimmung der aktuell auftretenden Greifkraft F möglich ist.

Damit sich mit einer einigermaßen sinnvollen Prozessorleistung des in der elektronischen Auswerteeinrichtung 32 enthaltenen Mikroprozessors eine ausreichend genaue Ermittlung des Belastungszustandes der Haltestruktur 6 durchführen lässt, ist die Haltewange 23 zweckmäßigerweise gedanklich in mehrere in der Hauptrichtung 7 aufeinanderfolgende Krafteinleitungszonen z1-z9 eingeteilt. Die in der Hauptrichtung 7 gemessene Länge dieser Krafteinleitungszonen z1-z9 ist untereinander vorzugsweise identisch.

In den Speichermitteln 33 sind für unterschiedliche Gegenkräfte F Vergleichskurven von zonenabhängig auftretenden Verformungswertepaaren für die beiden hinsichtlich ihrer Relativposition überwachten Komponentenpaare 28a, b; 28a, c hinterlegt.

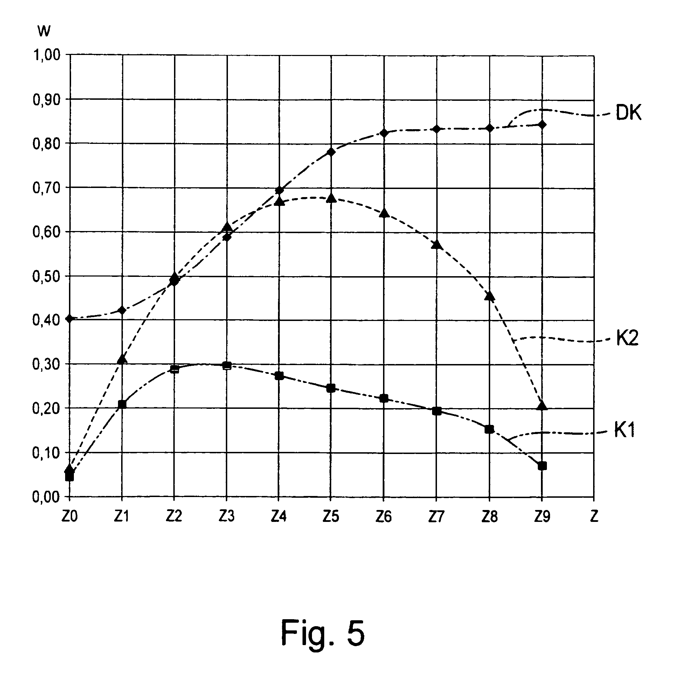

Im Diagramm der Figur 5 sind die für eine bestimmte Greifkraft F aufgezeichneten und in den Speichermitteln 33 hinterlegten Vergleichskurven K1 und K2 abgebildet, die jeweils die auch als Auslenkung bezeichenbare relative Positionsänderung "w" eines jeweiligen Komponentenpaares 28a, b; 28a, c als Funktion von der jeweiligen Krafteinleitungszone "z" repräsentieren. In diesem Diagramm ist außerdem eine die Differenz zwischen den beiden Vergleichskurven K2 und K1 wiedergebende Differenzkurve DK aufgetragen, bei der allerdings zur besseren Erkennbarkeit der Nullpunkt der Ordinate nach oben verschoben ist. In den Speichermitteln sind nun für unterschiedliche Gegenkräfte F derartige Vergleichskurven-Kennfelder hinterlegt.

Die elektronische Auswerteeinrichtung 32 verfügt über Vergleichermittel 35, mit deren Hilfe die Auswerteeinrichtung 32 einen Vergleich durchführen kann zwischen bei einer momentanen Gegenkraft aktuell erfassten Verformungswertepaaren und den in den Speichermitteln hinterlegten Referenz- beziehungsweise Vergleichsdaten. Wird bei diesem Vergleich eine Übereinstimmung zwischen dem aktuell ermittelten Verformungswertepaar und einem zur gleichen Krafteinleitungszone z gehörenden Vergleichswertepaar eine Übereinstimmung festgestellt, ermöglicht dies die Bestimmung des aktuellen Krafteinleitungsortes und auch der an diesem Krafteinleitungsort angreifenden Gegenkraft F.

Der Vergleichsalgorithmus kann selbstverständlich auch auf der Basis der Werte jeweils nur einer Vergleichskurve K1 oder K2 und unter ergänzender Berücksichtigung der Differenzkurve eine Auswertung vornehmen.

Es versteht sich, dass auch mehr als zwei Komponentenpaare hinsichtlich ihrer Relativposition überwachbar und erfassbar sind, so dass die für jeden Verformungszustand ermittelte Verformungswertegruppe nicht nur aus einem Verformungswertepaar besteht, sondern mehr als zwei Verformungswerte beinhaltet. Als Vergleichsdaten werden hierbei in mehr als zwei Vergleichskurven hinterlegte Vergleichswerte herangezogen, wobei die Anzahl der Vergleichskurven der Anzahl der Vergleichswerte pro Vergleichswertegruppe entspricht.

Zur Messwerterfassung sind die Halteeinheiten 3 beim Ausführungsbeispiel in vorteilhafter Weise mit je einer Bewegungsumsetzungsmechanik 36 ausgestattet, die in vorteilhafter Ausgestaltung als Hebelmechanik konzipiert ist. Beim Ausführungsbeispiel der Figuren 3 und 4 ist diese Bewegungsumsetzungsmechanik 36 entsprechend der Überwachung zweier Komponentenpaare 28a, b; 28a, c zweifach vorhanden.

Jede Bewegungsumsetzungsmechanik 36 verfügt exemplarisch über einen an der Basis 5 und insbesondere an der Basisplatte 13 verschwenkbar gelagerten Schwenkarm 37. Die Schwenkachse 38 des Schwenkarmes 37 verläuft parallel zu den Gelenkachsen der Gelenkstellen 26.

Mit Abstand zu dem durch die Schwenkachse 38 definierten Schwenklagerbereich ist an dem Schwenkarm 37 ein Indikatorglied 42 angeordnet. Exemplarisch bestehen das Indikatorglied 42 und der Schwenkarm 37 aus einem einzigen Stück.

Der Schwenkarm 37 erstreckt sich außerhalb des Basisgehäuses 14 in dem von den beiden Seitenwangen 16, 17 seitlich begrenzten Zwischenraum. Dort befindet sich auch die Schwenkachse 38. Das Indikatorglied 42, das beim Ausführungsbeispiel stift- oder bolzenartig ausgebildet ist, ragt ausgehend von dem Schwenkarm 37 durch eine Durchbrechung 43 der Basisplatte 13 hindurch ins Innere des Basisgehäuses 14 hinein. Der Durchtritt durch die Durchbrechung 43 erfolgt zweckmäßigerweise unter Abdichtung, wobei in der Zeichnung eine hierfür geeignete Abdichtmembran 44 gezeigt ist. An der Basis 5, exemplarisch im Innern des Basisgehäuses 14, befindet sich eine mit dem Indikatorglied 42 kooperierende Sensoreinrichtung 45. Die Sensoreinrichtung 45 wird entsprechend einer sich beim Ausführungsbeispiel in einer Auslenkung äußernden und in der Zeichnung durch einen Doppelpfeil illustrierten Indikatorbewegung 46 betätigt.

Wie schon erwähnt, bildet die Basis 5 eine erste Komponente 28a eines jeweiligen, hinsichtlich seiner Relativposition zu erfassenden Komponentenpaares 28a, b; 28a, c. Der Schwenkarm 37 ist an dieser als erste Komponente 28a fungierenden Basis 5 angelenkt und außerdem, an einer zu der Schwenkachse 38 beabstandeten Stelle, mit der jeweils zweiten Komponente 28b beziehungsweise 28c des jeweiligen Komponentenpaares bewegungsgekoppelt.

Dementsprechend ist der Schwenkarm 37 beim Ausführungsbeispiel der Figuren 1 und 2 mit der der Basis 5 benachbarten Koppelstrebe 25 bewegungsgekoppelt, während beim Ausführungsbeispiel der Figuren 3 und 4 der Schwenkarm 37 der einen Bewegungsumsetzungsmechanik 36 mit der ersten Koppelstrebe 25 und der Schwenkarm 37 der zweiten Bewegungsumsetzungsmechanik 36 mit der darauffolgenden Kopplungsstrebe 25 bewegungsgekoppelt ist.

Zur Bewegungskopplung kommt zweckmäßigerweise jeweils eine starre Mitnehmerstrebe 47 zum Einsatz, die jeweils gelenkig einerseits am Schwenkarm 37 und andererseits an der bewegungsgekoppelten Koppelstrebe 25 gelagert ist. Das am Schwenkarm 37 angeordnete erste Gelenk ist mit Bezugsziffer 48 bezeichnet, das an der jeweils zugeordneten Koppelstrebe 25 angeordnete zweite Gelenk mit Bezugsziffer 49. Die Mitnehmerstrebe 47 kann eine lineare Erstreckung haben oder kann auch, wie dies in Figuren 3 und 4 strichpunktiert angedeutet ist, insbesondere bogenförmig gekrümmt sein. Letzteres dient insbesondere zur Vermeidung von Kollisionen mit anderen Komponenten der Haltestruktur 6.

Aufgrund des Umstandes, dass gemäß Figuren 3 und 4 die beiden Schwenkarme 37 an in der Hauptrichtung 7 beabstandet zueinander angeordneten Koppelstreben 25 angelenkt sind, ergeben sich für die beiden Mitnehmerstreben 47 unterschiedliche Längen.

Gemäß Figuren 1 und 2 befindet sich das erste Gelenk 48 zwischen der Schwenkachse 38 und dem Indikatorglied 42. Der Schwenkarm 37 ist hier also quasi als einarmiger Hebel konzipiert.

Es besteht jedoch auch die Möglichkeit, entsprechend der in Figuren 3 und 4 realisierten Bauform die Schwenkachse 38 zwischen dem ersten Gelenk 48 und dem Indikatorglied 42 anzuordnen. Auf diese Weise bildet der Schwenkarm 37 einen zweiarmigen Hebel. Diese Anordnung empfiehlt sich vor allem beim doppelten Vorhandensein einer Bewegungsumsetzungsmechanik 36, da hierdurch beide Schwenkarme 37 gemeinsam an ein und derselben Schwenkachse 38 schwenkbar gelagert sein können.

Zweckmäßig ist es, wenn gemäß Figuren 3 und 4 beim Vorhandensein zweier Schwenkarme 37 die beiden Indikatorglieder 42 ebenso auf einander entgegengesetzten Seiten der Schwenkachse 38 zu liegen kommen wie die beiden ersten Gelenke 48. Man hat somit quasi eine sich überkreuzende Schwenkarmanordnung 37.

Wenn im Rahmen einer Verformung der Haltewange 23 die Koppelstreben 25 ihre Relativposition bezüglich der Basis 5 ändern, erfahren die Schwenkarme 37 über die mit ihnen gekoppelten Mitnehmerstreben 47 eine eine Schwenkbewegung in der einen oder anderen Richtung hervorrufende Schwenkkraft. Aus der Schwenkbewegung resultiert die Indikatorbewegung 46 mit entsprechender Betätigung der zugeordneten Sensoreinrichtung 45.

Wenn zwei Bewegungsumsetzungsmechaniken 36 vorhanden sind, ist zweckmäßigerweise jedem Indikatorglied 42 eine eigene Sensoreinrichtung 45 zugeordnet.

Die Sensoreinrichtung 45 ist somit in der Lage, aufgrund der Indikatorbewegung 46 die sich verändernde Relativposition zwischen der Basis 5 und der über die Mitnehmerstrebe 47 angekoppelten Koppelstrebe 25 als Verformungswert zu ermitteln. In Figuren 2 und 4 ist mit Δw eine aus der Einwirkung einer Greifkraft resultierende relative Positionsänderung kenntlich gemacht, die mit Hilfe der Sensoreinrichtung 45 detektierbar ist.

Auf der Basis der von der Sensoreinrichtung 45 ermittelten Werte generiert die elektronische Auswerteeinrichtung 32 ein insbesondere als Spannungssignal vorliegendes elektrisches Ausgangssignal, das mit Hilfe von Signalausgabemitteln 52a und/oder 52b zur Weiterverarbeitung in einer externen elektronischen Steuereinrichtung ausgebbar ist.

Es besteht die Möglichkeit, zur Ausgabe elektrischer Ausgangssignale geeignete Signalausgabemittel in Form eines Kabels 52a oder auch in Form eines drahtlos arbeitenden Senders 52b zu realisieren.

Für die mindestens eine Sensoreinrichtung 45 kommen prinzipiell unterschiedliche Funktionsprinzipien in Frage. Beim Ausführungsbeispiel enthält die Sensoreinrichtung 45 ein einerseits an der Basis 5 befestigtes Sensor-Biegeelement 53, das mit Abstand zur Einspannstelle von dem Indikatorglied 42 beaufschlagt ist und bei der Indikatorbewegung 46 durch das Indikatorglied 42 auslenkbar ist. Das Sensor-Biegeelement 53 ist insbesondere aus einem Leiterplattenmaterial gefertigt und kann aufgedruckte Widerstandspasten besitzen, die bei Dehnung oder Stauchung eine Widerstandsänderung erzeugen. Indem die generierten Widerstände zu einer Wheatstonebrücke zusammengeschaltet sind, lässt sich eine biegeabhängige Spannung bei entsprechender Beschaltung dieser Wheatstonebrücke messen.

Aufgrund seiner flachen Bauweise eignet sich ein Sensor-Biegeelement 53 besonders gut zur platzsparenden Unterbringung im geschützten Bereich im Innern des Basisgehäuses 14.

Da das Leiterplattenmaterial in der Regel kein ideal elastisches Verhalten aufweisen kann, kann zusätzlich eine Federeinrichtung 54 vorhanden sein, die den auslenkbaren Abschnitt des Sensor-Biegeelements 53 permanent gegen das Indikatorglied 42 andrückt.

Wenn das Sensor-Biegeelement 53 aus einer Leiterplatte geformt ist, lassen sich beim Vorliegen eines entsprechenden Layouts problemlos weitere elektronische Bauelemente implementieren, beispielsweise Messbrückenverstärker oder Leuchtanzeigeelemente.

Andere Bauformen von Sensoreinrichtungen 45 können beispielsweise einen von dem Indikatorglied 42 beaufschlagbaren Biegebalken enthalten, wobei zum Messen der Auslenkung Dehnmessstreifenstrukturen vorhanden sind. Solche Strukturen können direkt auf die glatte Oberfläche des Biegebalkens aufgedruckt oder als Dehnmessstreifen aufgeklebt werden.

Die Signalausgabemittel 52a, 52b können anstelle eines direkt befestigten Kabels auch eine Steckverbindung enthalten.

Wenn gemäß Figuren 3 und 4 zwei Indikatorglieder 42 vorhanden sind, kommen zweckmäßigerweise zwei unabhängig voneinander messende Sensor-Biegeelemente 53 zum Einsatz, was in der Zeichnung allerdings nicht weiter abgebildet ist. Diese beiden Sensor-Biegeelemente 53 können gemeinsam in ein und derselben Leiterplatte kompakt realisiert sein.

Durch Verwendung einer Bewegungsumsetzungsmechanik 36 bei der Ermittlung der Verformungswerte besteht die vorteilhafte Möglichkeit, je nach Auslegung unterschiedliche Übersetzungsverhältnisse zu generieren. Auf diese Weise ist eine optimale Anpassung an das Betriebsverhalten der zugeordneten Sensoreinrichtung 45 möglich.

Mindestens eine Sensoreinrichtung 45 kann auch, wie dies in Figuren 1 und 2 gestrichelt angedeutet ist, auf einem optischen Funktionsprinzip basieren. Hierbei bietet sich insbesondere eine Ausgestaltung in Form eines Reflexlichtsensors an, der abstandsabhängig den Reflexionsgrad einer beabstandeten Fläche misst.

Eine weitere Möglichkeit zur Realisierung einer Sensoreinrichtung 45 besteht in der Verwendung eines Magnetfeldsensors, der auf einen an dem Indikatorglied 42 angeordneten Permanentmagnet reagiert. Kapazitive Messprinzipien wären aber ebenso vorstellbar. Auch könnte das Indikatorglied 42 lediglich auf einen Schalter einwirken.

Eine weitere zweckmäßige Ausgestaltung der Haltevorrichtung 1 sieht vor, dass die Erfassungsmittel 27 eine Leuchtanzeigeeinrichtung 55 zur Visualisierung des Verformungsgrades der Haltewange 23 enthalten. Hierbei ist es von Vorteil, wenn die Visualisierung in Abhängigkeit vom Verformungsgrad variabel erfolgt. Beispielsweise kann in Abhängigkeit vom Verformungsgrad eine unterschiedliche Anzahl von Lichtquellen aktiviert werden und/oder es kann in Abhängigkeit vom Verformungsgrad die Lichtintensität variiert werden.

## Patentansprüche

1. Haltevorrichtung zum Festhalten von Gegenständen (2), insbesondere Greifvorrichtung, mit mindestens einer Halteeinheit (3), die eine Basis (5) und eine sich in einer Hauptrichtung (7) von der Basis (5) weg erstreckende Haltestruktur (6) aufweist, wobei die Haltestruktur (6) zwei sich ausgehend von der Basis (5) in der Hauptrichtung (7) unter gegenseitiger Annäherung zu einem Kopfbereich (15) hin erstreckende biegeelastische Seitenwangen (16, 17) und mehrere, jeweils an beiden Seitenwangen (16, 17) angelenkte und in der Hauptrichtung (7) zueinander beabstandete starre Koppelstreben (25) enthält, wobei wenigstens eine Seitenwange (16, 17) eine zum Angreifen am jeweils festzuhaltenden Gegenstand (2) dienende Haltewange (23) bildet, wobei die Haltevorrichtung (1) mit Erfassungsmitteln (27) ausgestattet ist, durch die die aufgrund der beim Halten eines Gegenstands auf die Haltewange (23) einwirkenden Gegenkraft auftretende kraftabhängige Verformung der Haltewange (23) erfassbar ist, **dadurch gekennzeichnet, dass** die Erfassungsmittel (27) ausgebildet sind, um mindestens eine sich bei einer Verformung der Haltewange (23) verändernde Relativposition zwischen zwei relativ zueinander bewegbaren Komponenten (28a, 28b, 28c) der Halteeinheit (3) zu erfassen.

2. Haltevorrichtung nach Anspruch 1, **dadurch gekennzeichnet, dass** die Erfassungsmittel (27) ausgebildet sind, um jeweils mindestens eine sich zwischen unterschiedlichen Paaren von relativ zueinander bewegbaren Komponenten (28a, 28b; 28a, 28c) der Halteeinheit (3) verändernde Relativposition zu erfassen.

3. Haltevorrichtung nach Anspruch 1 oder 2, **dadurch gekennzeichnet, dass** mindestens ein Paar von den Erfassungsmitteln (27) hinsichtlich ihrer Relativposition erfassbarer Komponenten (28a, 28b, 28c) von der Basis (5) und von einer Koppelstrebe (25) gebildet ist.

4. Haltevorrichtung nach Anspruch 3 in Verbindung mit Anspruch 2, **dadurch gekennzeichnet, dass** mehrere Paare von durch die Erfassungsmittel (27) hinsichtlich ihrer Relativposition erfassbaren Komponenten (28a, 28b, 28c) jeweils als eine Komponente (28a) die Basis (5) und als andere Komponente (28b, 28c) unterschiedliche Koppelstreben (25) enthalten.

5. Haltevorrichtung nach einem der Ansprüche 1 bis 4, **dadurch gekennzeichnet, dass** mindestens eine von den Erfassungsmitteln (27) erfassbare Relativposition ein sich zwischen den Komponenten (28a, 28b, 28c) verändernder Abstand ist.

6. Haltevorrichtung nach einem der Ansprüche 1 bis 5, **dadurch gekennzeichnet, dass** die Erfassungsmittel (27) eine sich zwischen den beiden hinsichtlich ihrer Relativposition erfassten Komponenten (28a, 28b, 28c) der Halteeinheit (3) zwischengeschaltete, insbesondere als Hebelmechanik ausgebildete Bewegungsumsetzungsmechanik (36) aufweisen.

7. Haltevorrichtung nach einem der Ansprüche 1 bis 6, **dadurch gekennzeichnet, dass** die Erfassungsmittel (27) ein zwischen die hinsichtlich ihrer Relativposition zu erfassenden Komponenten (28a, 28b, 28c) der Halteeinheit (3) zwischengeschaltetes und bei einer Relativbewegung dieser beiden Komponenten (28a, 28b, 28c) relativ zu beiden Komponenten (28a, 28b, 28c) unter Ausführung einer Indikatorbewegung (46) bewegtes Indikatorglied (42) aufweisen, das mit einer auf die Indikatorbewegung (46) oder die bei der Indikatorbewegung erfolgte Auslenkung ansprechenden Sensoreinrichtung (45) kooperiert, die zweckmäßigerweise derart ausgebildet ist, dass sie die Indikatorbewegung (46) oder die bei der Indikatorbewegung stattfindende Auslenkung in ein von einer elektronischen Auswerteeinrichtung (32) verarbeitbares elektrisches Signal umwandelt.

8. Haltevorrichtung nach Anspruch 7, **dadurch gekennzeichnet, dass** das Indikatorglied (42) an einem an der einen Komponente (28a, 5) schwenkbar gelagerten Schwenkarm (37) angeordnet ist, der an einer mit Abstand zu seiner Schwenkachse (38) angeordneten Stelle, insbesondere über eine gelenkig gelagerte und vorzugsweise gekrümmte Mitnehmerstrebe (47), mit der anderen Komponente (28b, 28c, 25) bewegungsgekoppelt ist.

9. Haltevorrichtung nach einem der Ansprüche 1 bis 8, **dadurch gekennzeichnet, dass** die Erfassungsmittel (27) zur Erfassung der kraftabhängigen Verformung über mindestens eine insbesondere auf der Basis von Dehnmessstreifenstrukturen oder auf optischer Basis arbeitende Sensoreinrichtung (45) verfügen.

10. Haltevorrichtung nach einem der Ansprüche 1 bis 9, **dadurch gekennzeichnet, dass** die Erfassungsmittel (27) eine insbesondere an oder in der Basis (5) der Halteeinheit (3) angeordnete elektronische Auswerteeinrichtung (32) enthalten, die auf der Basis von in Speichermitteln (33) hinterlegten verformungsabhängigen Vergleichsdaten in der Lage sind, die die erfasste Verformung hervorrufende Gegenkraft zu ermitteln.

11. Haltevorrichtung nach einem der Ansprüche 1 bis 10, **dadurch gekennzeichnet, dass** die Erfassungsmittel (27) derart ausgebildet sind, dass sie für mehrere Verformungszustände und insbesondere für jeden Verformungszustand der Haltewange (23) die von wenigstens zwei unterschiedlichen Stellen der Haltestruktur (6) abgeleiteten Verformungswerte erfassen können, wobei eine elektronische Auswerteeinrichtung (32) der Erfassungsmittel (27) ausgebildet ist, um auf der Grundlage der für jeden Verformungszustand ermittelten Verformungswertegruppe einen Krafteinleitungsort an der Haltewange (23) zu identifizieren, an dem die Gegenkraft momentan eingeleitet wird.

12. Haltevorrichtung nach Anspruch 11, **dadurch gekennzeichnet, dass** die Haltewange (23) in in der Hauptrichtung (7) aufeinanderfolgende Krafteinleitungszonen (z) eingeteilt ist, wobei die elektronische Auswerteeinrichtung (32) über Speichermittel (33) verfügt, in denen für unterschiedliche Gegenkräfte Vergleichskurven (K1, K2) von zonenabhängig auftretenden Verformungswertegruppen hinterlegt sind und wobei die elektronische Auswerteeinrichtung (32) über Vergleichermittel (35) verfügt, durch die im Rahmen eines Vergleiches aktuell ermittelter Verformungswertegruppen mit den hinterlegten Vergleichskurven die zugehörige Krafteinleitungszone (z) und zweckmäßigerweise auch die dort eingeleitete Gegenkraft bestimmbar ist.

13. Haltevorrichtung nach einem der Ansprüche 1 bis 12, **dadurch gekennzeichnet, dass** die Erfassungsmittel (27) eine Leuchtanzeigeeinrichtung (55) zur Visualisierung des Verformungsgrades der Haltewange (23) aufweisen, wobei die Visualisierung insbesondere verformungsabhängig variabel erfolgt.

14. Haltevorrichtung nach einem der Ansprüche 1 bis 13, **dadurch gekennzeichnet, dass** sie mit zur drahtgebundenen oder zur drahtlosen Signalausgabe ausgebildeten Signalausgabemitteln (52a, 52b) ausgestattet ist.

## Claims

1. Holding device for the firm holding of objects (2), in particular a gripping device, with at least one holding unit (3) which has a base (5) and a holding structure (6) extending away from the base (5) in a main direction (7), wherein the holding structure (6) includes two side cheeks (16, 17), flexural in bending and extending from the base (5) and approaching one another in the main direction (7) towards a head section (15), and several rigid connecting struts (25), each hinged to both side cheeks (16, 17) and spaced apart in the main direction (7), wherein at least one side cheek (16, 17) forms a holding cheek (23) serving to grip on to the respective object (2) to be held, wherein the holding device (1) is equipped with detection means (27) through which the force-dependent deformation of the holding cheek (23) occurring due to the counteracting force acting on the holding cheek (23) during holding of an object may be detected, **characterised in that** the detection means (27) are designed to detect at least one relative position, changing during deformation of the holding cheek (23), between two components (28a, 28b, 28c) of the holding unit (3) which are movable relative to one another.

2. Holding device according to claim 1, **characterised in that** the detection means (27) are designed to detect at least one changing relative position between different pairs of components (28a, 28b, 28c) of the holding unit (3) which are movable relative to one another.

3. Holding device according to claim 1 or 2, **characterised in that** at least one pair of components (28a, 28b, 28c) detectable by the detection means (27) in respect of their relative position is formed by the base (5) and one connecting strut (25).

4. Holding device according to claim 3 in combination with claim 2, **characterised in that** several pairs of components (28a, 28b, 28c) detectable by the detection means (27) in respect of their relative position include in each case the base (5) as one component (28a) and different connecting struts (25) as the other component (28b,28c).

5. Holding device according to any of claims 1 to 4, **characterised in that** at least one relative position detectable by the detection means (27) is a varying distance between the components (28a, 28b, 28c).

6. Holding device according to any of claims 1 to 5, **characterised in that** the detection means (27) have a movement realisation mechanism (36), in particular in the form of a lever mechanism, interconnected between the two components (28a, 28b, 28c) of the holding unit (3) detected in respect of their relative position.

7. Holding device according to any of claims 1 to 6, **characterised in that** the detection means (27) have an indicator element (42), interconnected between the components (28a, 28b, 28c) of the holding unit (3) to be detected in respect of their relative position, and moved during a relative movement of these two components (28a, 28b, 28c) relative to both components (28a, 28b, 28c) and executing an indicator movement (46), which cooperates with a sensor device (45) responding to the indicator movement (46) or to the deflection effected during the indicator movement and is expediently so designed that it converts the indicator movement (46) or the deflection taking place during the indicator movement into an electrical signal which may be processed by an electronic evaluation unit (32).

8. Holding device according to claim 7, **characterised in that** the indicator element (42) is located on a swivel arm (37) pivotably mounted on the one component (28a, 5), which is movement-coupled to the other components ( 28b, 228c, 25) at a point arranged with clearance from its swivel axis (38), in particular via a hinged and preferably curved driving strut (47).

9. Holding device according to any of claims 1 to 8, **characterised in that** the detection means (27) have, to detect the force-dependent deformation, at least one sensor device (45) operating in particular on the basis of strain gauge structures or on an optical basis.

10. Holding device according to any of claims 1 to 9, **characterised in that** the detection means (27) include an electronic evaluation unit (32), located in particular on or in the base (5) of the holding unit (3), which is able on the basis of deformation-dependent comparison data stored in memory means (33) to determine the counteracting force generating the detected deformation.

11. Holding device according to any of claims 1 to 10, **characterised in that** the detection means (27) are so designed that they are able to detect, for several deformation states and in particular for each deformation state of the holding cheek (23), the deformation values derived from at least two different points on the holding structure (6), wherein an electronic evaluation unit (32) of the detection means (27) is designed to identify, on the basis of the deformation value group determined for each deformation state, a force initiation point on the holding cheek (23) at which the counteracting force is momentarily initiated.

12. Holding device according to claim 11, **characterised in that** the holding cheek (23) is divided into force initiation zones (z), consecutive in the main direction (7), while the electronic evaluation unit (32) has memory means (33) in which are stored, for different counteracting forces, comparison curves (K1, K2) of zone-dependent occurring deformation value groups, and wherein the electronic evaluation unit (32) has comparing means (35) with which, in the course of a comparison of currently determined deformation value groups with the stored comparison curves, the associated force initiation zone (z) and expediently also the counteracting force initiated there may be determined.

13. Holding device according to any of claims 1 to 12, **characterised in that** the detection means (27) have an illuminated display device (55) for visualisation of the degree of deformation of the holding cheek (23), wherein the visualisation is in particular variable depending on the deformation.

14. Holding device according to any of claims 1 to 13, **characterised in that** it is equipped with signal output means (52a, 52b) designed for wire-bound or wireless signal output.

## Revendications

1. Dispositif de support pour le support d'objets (2), plus particulièrement un dispositif de préhension, avec au moins une unité de support (3) qui comprend une base (5) et une structure de support (6) qui s'étend à partir de la base (5) dans une direction principale (7), la structure de support (6) comprenant deux joues latérales (16, 17) flexibles s'étendant à partir de la base (5) dans la direction principale (7) avec un rapprochement mutuel vers une zone de tête (15) et plusieurs entretoises de liaison (25) rigides, articulées chacune avec les deux joues latérales (16, 17) et écartées entre elles dans la direction principale (7), au moins une joue latérale (16, 17) constituant une joue de support (23) permettant la préhension de l'objet (2) à supporter, le dispositif de support (1) étant muni de moyens de mesure (27) permettant de mesurer la déformation de la joue de support (23), provoquée par la force opposée agissant sur la joue de support (23) lors du support d'un objet, **caractérisé en ce que** les moyens de mesure (27) sont conçus pour mesurer au moins une position relative entre deux composants (28a, 28b, 28c) de l'unité de support (3) mobiles l'un par rapport à l'autre, qui change dans le cas d'une déformation de la joue de support (23).

2. Dispositif de support selon la revendication 1, **caractérisé en ce que** les moyens de mesure (27) sont conçus pour mesurer au moins une position relative variable entre différentes paires de composants (28a, 28b ; 28a, 28c) de l'unité de support (3), mobiles les uns par rapport aux autres.

3. Dispositif de support selon la revendication 1 ou 2, **caractérisé en ce qu'**au moins une paire de composants (28a, 28b, 28c), mesurables en ce qui concerne leur position relative par les moyens de mesure (27), est constituée de la base (5) et d'une entretoise de liaison (25).

4. Dispositif de support selon la revendication 3, en lien avec la revendication 2, **caractérisé en ce que** plusieurs paires de composants (28a, 28b, 28c), mesurables en ce qui concerne leur position relative par les moyens de mesure (27), comprennent, en tant que composant (28a), la base (5) et, en tant qu'autre composant (28b, 28c), différentes entretoises de liaison (25).

5. Dispositif de support selon l'une des revendications 1 à 4, **caractérisé en ce qu'**au moins une position relative mesurable par les moyens de mesure (27) est une distance variable entre les composants (28a, 28b, 28c).

6. Dispositif de support selon l'une des revendications 1 à 5, **caractérisé en ce que** les moyens de mesure (27) comprennent un mécanisme de conversion de mouvement (36) disposé entre les deux composants (28a, 28b, 28c) de l'unité de support (3), mesurés en ce qui concerne leur position relative, et conçu plus particulièrement comme un mécanisme à levier.

7. Dispositif de support selon l'une des revendications 1 à 6, **caractérisé en ce que** les moyens de mesure (27) comprennent un élément indicateur (42) disposé entre les composants (28a, 28b, 28c) de l'unité de support (3), qui doivent être mesurés en ce qui concerne leur position relative et qui est déplacé lors d'un mouvement relatif de ces deux composants (28a, 28b, 28c) par rapport aux deux composants (28a, 28b, 28c) en décrivant un mouvement d'indicateur (46), et qui interagit avec un dispositif à capteur (45) réagissant au mouvement d'indicateur (46) ou à la déviation survenant lors du mouvement d'indicateur, ce dispositif étant conçu de façon à convertir le mouvement d'indicateur (46) ou la déviation survenant lors du mouvement d'indicateur en un signal électrique pouvant être traité par un dispositif d'analyse électronique (32).

8. Dispositif de support selon la revendication 7, **caractérisé en ce que** l'élément indicateur (42) est disposé sur un bras pivotant (37) logé de manière pivotante au niveau d'un composant (28a, 5), ce bras étant couplé en mouvement avec l'autre composant (28b, 28c, 25) au niveau d'un endroit à une certaine distance de son axe de pivotement (38), plus particulièrement par l'intermédiaire d'une entretoise d'entraînement (47) articulée et de préférence incurvée.

9. Dispositif de support selon l'une des revendications 1 à 8, **caractérisé en ce que** les moyens de mesure (27) sont munis, pour la mesure de la déformation en fonction de la force, d'au moins un dispositif à capteur (45) fonctionnant plus particulièrement sur la base de structures à jauges de déformation ou sur une base optique.

10. Dispositif de support selon l'une des revendications 1 à 9, **caractérisé en ce que** les moyens de mesure (27) comprennent un dispositif d'analyse électronique (32) disposé sur ou dans la base (5) de l'unité de support (3), ce dispositif étant en mesure, sur la base de données comparatives dépendant de la déformation enregistrées dans des mémoires (33), de déterminer la force opposée causant la déformation mesurée.

11. Dispositif de support selon l'une des revendications 1 à 10, **caractérisé en ce que** les moyens de mesure (27) sont conçus de façon à ce qu'ils puissent mesurer les valeurs de déformation, relevées à au moins deux endroits différents de la structure de support (6), pour plusieurs états de déformation et plus particulièrement pour chaque état de déformation de la joue de support (23), un dispositif d'analyse électronique (32) des moyens de mesure (27) étant conçu pour identifier, sur la base de l'ensemble de valeurs de déformation déterminées pour chaque état de déformation, l'endroit sur la joue de support (23) où la force opposée est exercée instantanément.

12. Dispositif de support selon la revendication 11, **caractérisé en ce que** la joue de support (23) est divisée en zones d'application des forces (z) qui se succèdent dans la direction principale (7), le dispositif d'analyse électronique (32) étant muni de mémoires (33) dans lesquelles des courbes comparatives (K1, K2) d'ensembles de valeurs de déformation apparaissant en fonction des zones sont enregistrées pour différentes forces opposées et le dispositif d'analyse électronique (32) étant muni de comparateurs (35) permettant de déterminer, en comparant les ensembles de valeurs de déformation déterminées avec les courbes comparatives enregistrées, la zone d'application de la force (z) et, de manière avantageuse, également la force opposée qui y est appliquée.

13. Dispositif de support selon l'une des revendications 1 à 12, **caractérisé en ce que** les moyens de mesure (27) comprennent un dispositif d'affichage lumineux (55) permettant la visualisation du degré de déformation de la joue de support (23), la visualisation étant plus particulièrement variable en fonction de la déformation.

14. Dispositif de support selon l'une des revendications 1 à 13, **caractérisé en ce qu'**il est muni de moyens de sortie de signaux (52a, 52b) conçus pour la sortie de signaux avec fils ou sans fils.
